(19) Europäisches Patentamt

European Patent Office

Office européen des brevets

(11) **EP 1 217 856 B1**

(12) **EUROPEAN PATENT SPECIFICATION**

(45) Date of publication and mention
of the grant of the patent:
**02.03.2005 Bulletin 2005/09**

(51) Int Cl.⁷: **H04Q 7/38**

(21) Application number: **01130215.5**

(22) Date of filing: **18.12.2001**

(54) **A mobile telephony operator random selection device and procedure for cellular phones**

Gerät und Verfahren zur zufälligen Auswahl von Mobiltelefon-Netzbetreibern für zellulare Funktelefone

Appareil et procédure pour la sélection aléatoire d'opérateur de téléphonie mobile pour téléphones cellulaires

(84) Designated Contracting States:
**AT BE CH CY DE DK ES FI FR GB GR IE IT LI LU MC NL PT SE TR**

(30) Priority: **20.12.2000 IT TO001186**

(43) Date of publication of application:
**26.06.2002 Bulletin 2002/26**

(73) Proprietor: **TELECOM ITALIA S.p.A.**
**20123 Milano (IT)**

(72) Inventor: **Lupano, Michele**
**10148 Torino (IT)**

(74) Representative:
**Riederer Freiherr von Paar zu Schönau, Anton**
**Boehmert & Boehmert**
**Kanzlei Landshut**
**Postfach 26 64**
**84010 Landshut (DE)**

(56) References cited:
**WO-A-00/74412** **US-A- 5 218 559**
**US-A- 5 915 214**

- **3GPP: "TS 23.122 (V3.4.2); NAS Functions related to Mobile Station (MS) in idle mode (Release 1999)"** [Online] 30 November 2000 (2000-11-30) , ETSI , VALBONNE, FRANCE XP002228619 Retrieved from the Internet: <URL: ftp://ftp.3gpp.org/specs/archive/23_series /23.122/23122-342.zip> [retrieved on 2003-01-24] * page 14 - page 15, paragraph 4.4.3.1.1 * * page 16, paragraph 4.4.3.2.1 *
- **"Digital cellular telecommunications system (Phase 2+);Security related network functions /GSM 03.20 version 7.2.0 Release 1998)"** ETSI TS 100 929 V7.2.0, XX, XX, November 1999 (1999-11), pages 1-104, XP002167429
- **WONG P W: "Random number generation without multiplication"** PROCEEDINGS OF THE ANNUAL INTERNATIONAL PHOENIX CONFERENCE ON COMPUTERS AND COMMUNICATIONS. SCOTTSDALE, MAR. 21 - 23, 1990, LOS ALAMITOS, IEEE COMP. SOC. PRESS, US, vol. CONF. 9, 21 March 1990 (1990-03-21), pages 217-221, XP010018430 ISBN: 0-8186-2030-7

## Description

This invention refers to the radio telecommunications systems, and in particular relates to a mobile telephony operator random selection device and procedure for cellular phones.

As is already known, when a user with a digital radio-mobile network cellular phone travels abroad, he finds that the mobile telephony operator to which he subscribes in his own country is not available. To obtain the required services, the user must select one of the operators present in the country he is in, and register with them to be able to benefit from the international roaming agreements.

When abroad, an operator can be selected either manually by the user or automatically by the cellular phone itself. In the latter case, one of the modes of selection of the operator is that the selection is generally made in a completely random way, regardless of the signal level received by the cellular phone.

The ways of selection of an operator, i.e. of a public land mobile network (PLMW), is specified in 3GPP: "TS 23.122 (V3.4.2); NAS Functions related to Mobile Station (MS) in idle mode (Release 1999)' [Online] 30 November 2000 (2000-11-30), ETSI, VALBONNE, FRANCE XP002228619 Retrieved from the Internet: <URL: ftp://ftp.3gpp.org/specs/archive/23_series/23.122/23122-342.zip> [retrieved on 2003-01-24], particularly chapters 4.4.3.1.1 and 4.4.3.2.1 where the automatic selection is described. The selection in random order is one of the choices, taken if some of the other choices are not applicable. The random selection is carried out in the mobile cellular phone, generally by a set of software instructions.

It is also known (US-A-5 915 214, col. 14 2nd paragraph) that a random select option may be chosen if an information channel established by a central processing facility and serving as an intermediary between the mobile communication users and the operators can not be obtained.

The fact that the selection is made at random means that no preference is to be given to those operators that transmit with power values that are higher than those of other operators, thus eliminating operator competition that would lead to increasingly higher power values.

Generally, the operator is selected in the following way A number between 1 and m is assigned to the network of each of the m number of operators received. A device inside the cellular phone then generates in a pseudo-casual way a number in the same range, which is then used to extract and select one of the networks. One of the procedures used according to the known technique consists in reading pseudo-random numbers on the system counters inside the cellular phone. Unfortunately, there is a problem in that the value read from these counters does not guarantee a completely random choice, in that the counters are read at a pre-established moment by the telephone management software procedure, and therefore there is no certainty that the operator will be selected really at random.

This technical problem can be resolved by the use of the mobile telephony operator random selection device and procedure for cellular phones referred to in this invention. These elements give the manufacturers of cellular phones the possibility to equip a cellular phone with the means to select a network without giving preference to any of the operators present in the territory visited by the user.

In particular, the subject of this invention is a mobile telephony operator random selection device and procedure for cellular phones, as described in the characterising parts of claims 1 and 4.

The foregoing and other characteristics of this invention will be made clearer by the following description of a preferred form of the invention, given by way of non-limiting example, and by the annexed drawing in which:

- Fig. 1 illustrates the scenario in which the cellular phone operates;
- Fig. 2 is a flow diagram of the operations performed by the device in the cellular phone.

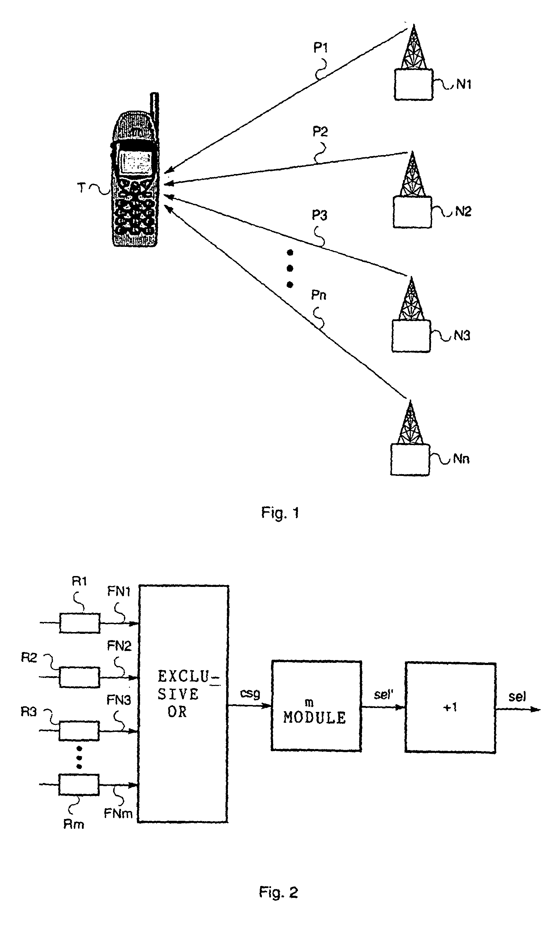

The scenario illustrated in Fig. 1 relates to a foreign country in which the user, with his cellular phone T, is travelling. A certain number, n, of radio-mobile networks, N1, N2, N3, ..., Nn, belonging to the same standard, with which the cellular phone is compatible, are to be found in this territory.

The cells of each network are equipped with "broadcast" radio links, which transmit in the respective coverage areas information that permits the cellular phones to synchronise into the cell and use the services offered by the operator. In general the synchronisation information is transmitted on a dedicated channel by each operator, and consists of digital signals arranged in a stream of frame numbers, which are periodically increased.

The operator random selection procedure uses this information in the following way. Let's suppose that telephone T receives m of the n broadcast radio links P1, P2, P3, ..., Pn, with a signal level higher than a pre-established minimum reception threshold.

As happens in already existing telephones, telephone T scans the signals present and stores the list of the operators in its memory. In this way, at the same time or immediately afterwards it acquires the frame numbers FN1, ..., FNm transmitted at that moment on the broadcast radio links P1, P2, P3, ..., Pm received. The frame numbers are stored in real-time in volatile storage registers inside the telephone and associated to the respective operators.

Since the m networks relate to different operators with network infrastructures that are not interconnected and not synchronised at radio interface level, the frame numbers FN1, ..., FNm are not temporally correlated and therefore can be considered as being supplied by m random number generators.

As illustrated in Fig. 2, the m frame numbers FN1, ..., FNm received are stored in registers R1, R2, R3, ..., Rm and subsequently combined with a series of arithmetic logic operations, called EXCLUSIVE OR or EX-OR. In particular, an initial EXCLUSIVE OR operation is performed on the first two frame numbers. The result is subjected to a new EXCLUSIVE OR operation with the third frame number, and so on until all the frame numbers have been subjected to this operation. The result of this series of operations is a random variable csg, which is a function of the m random frame numbers FN1, ..., FNm and has a dimension that is equal to that of the frame numbers.

$$csg = FN1\ EX\text{-}OR\ FN2\ EX\text{-}OR\ ...\ EX\text{-}OR\ FNm$$

In the next step, a sel index ranging from 1 to m is obtained from the csg variable, calculated as described above in real-time by the telephone T. This sel index can be used to extract and select one of the m networks. To do this, the m MODULE operation is applied to the csg: as is known, this operation consists in the dividing of the csg variable by m, and using the remainder as the result, which by definition is less than the divisor and included between 0 and m-1.

$$sel' = MODULE_m\ (csg)$$

$$sel = sel' + 1$$

The sum with 1 is used to position the sel index in the required interval 1 ... m.

The sel index value can now be used by the telephone T to select one of the networks present in the country visited.

This result is obtained by the use of remote frame numbers, which are random and not temporally correlated, and are received from network infrastructures of different operators. The randomness of the variables is increased with the EXCLUSIVE OR operation that is normally used to make a variable "pseudo-random".

To make the procedure possible, the set of software instructions in the cellular phone that select the operator according to internal criteria are substituted with a set of software instructions that perform the operations described.

The cellular phone can also be fitted with a special device that is capable of performing the operations in the procedure described above.

Obviously this description is given as a non-limiting example. Variants and modifications are possible, without emerging from the protection field of the claims.

## Claims

1. A mobile telephone operator random selection procedure for cellular phones, operating in a context in which the cells of each of m networks received (N1, ..., Nm) transmit synchronisation information on a specific channel, consisting of digital signals arranged in streams of frame numbers (FN1, ..., FNm) that are periodically increased, **characterised by** the fact that the m frame numbers (FN1, ..., FNm) are stored in the telephone (T) during the scanning phase of the radio links (P1, ..., Pm) present, associated to the respective operators, and are subsequently combined by a series of EXCLUSIVE OR operations, the result being a variable (csg), which is subsequently subjected to an m MODULE operation, consisting in dividing the variable by m and taking the remainder plus 1 as the result, thus obtaining a value (sel index) included between 1 and m, which can be used by the telephone (T) to select one of the networks (N1, ..., Nm) present.

2. A mobile telephony operator random selection procedure for cellular phones as in claim 1, **characterised by** the fact that said series of EXCLUSIVE OR operations consists of an EXCLUSIVE OR operation carried out on the first two frame numbers (FN1, FN2), the result is then subjected to another EXCLUSIVE OR operation with the third frame number (FN3), and so on until all the frame numbers have been subjected to this operation.

3. A mobile telephony operator random selection procedure for cellular phones as in any of the previous claims, the cellular phones containing a set of stored software instructions determined to select the operator according to internal criteria, **characterised by** the fact that the set of software instructions in the cellular phone that select the operator according to internal criteria are substituted with another set of software instructions that carry out the operations described.

4. Device for operating in a context in which the cells of each of m networks received (N1, ..., Nm) transmit synchronisation information on a specific channel, consisting of digital signals arranged in streams of frame numbers (FN1, ..., FNm) that are periodically increased, **characterised by** the fact that it includes:

   - means for storing the said m frame numbers (FN1, ..., FNm) on the telephone (T) during the scanning phase of the radio links (P1, ..., Pm) present;

- means to combine said m frame numbers (FN1, ..., FNm) by a series of EXCLUSIVE OR operations in order to obtain the variable (csg);
- means to divide the said variable by m and extract the remainder (MODULE operation), in order to obtain an index (sel');
- means to increase said index (sel') by 1, in order to obtain the index (sel) with a value included between 1 and m, which can be used by the telephone (T) to select one of the networks (N1, ..., Nm) present.

5. Device as per claim 4, **characterised by** the fact that said means used to combine said m frame numbers (FN1, ..., FNm) are arranged to perform an EXCLUSIVE OR operation on the first two frame numbers (FN1, FN2), and to subsequently subject the result to another EXCLUSIVE OR operation on the third frame number (FN3), and so on until all the frame numbers have been subjected to this operation.

6. A cellular phone comprising a device for selecting a mobile telephone operator, said device being realised according to claim 4 or 5.


**Patentansprüche**

1. Zufallswahlverfahren für Mobiltelefone zur Wahl eines Mobiltelefon-Netzbetreibers, für den Betrieb in einem Betriebszusammenhang, bei dem die Zellen jedes von m empfangenen Netzen (N1, ..., Nm) Synchroninformation auf einem spezifischen Kanal senden, die aus digitalen Signalen besteht, die in Flüssen von Rahmennummern (FN1, ..., FNm) angeordnet sind, welche periodisch ansteigen; **dadurch gekennzeichnet, daß** die m Rahmennummern (FN1, ..., FNm) im Telefon (T) während der Phase des Abtastens der vorhandenen Funkstrecken (P1, ..., Pm), die den jeweiligen Netzbetreiberen zugeordnet sind, gespeichert werden und anschließend durch eine Serie von Operationen EXKLUSIV ODER kombiniert werden, woraus eine Variable (csg) entsteht, die anschließend einer Modulo-m-Operation unterworfen wird, die darin besteht, daß man die Variable durch m teilt und den Rest plus 1 als das Ergebnis nimmt, wodurch man einen Wert (Sel-Index) im Intervall zwischen 1 und m erhält, der vom Telefon (T) verwendet werden kann, eines der vorliegenden Netze (N1, ..., Nm) zu wählen.

2. Zufallswahlverfahren für Mobiltelefone zur Wahl eines Mobiltelefon-Netzbetreibers nach Anspruch 1, **dadurch gekennzeichnet, daß** die Serie der Operationen EXKLUSIV ODER darin besteht, daß man an den ersten beiden Rahmennummern (FN1, FN2) eine Operation EXKLUSIV ODER durchführt und dann das Ergebnis einer weiteren Operation EXKLUSIV ODER mit der dritten Rahmennummer (FN3) unterwirft und so weiter, bis alle Rahmennummern dieser Operation unterworfen worden sind.

3. Zufallswahlverfahren für Mobiltelefone zur Wahl eines Mobiltelefon-Netzbetreibers nach einem der vorhergehenden Ansprüche, wobei die Mobiltelefone eine Gruppe von gespeicherten Programmbefehlen enthalten, die dazu bestimmt sind, den Netzbetreiber nach internen Kriterien zu wählen, **dadurch gekennzeichnet, daß** die Gruppe der Programmbefehle im Mobiltelefon, die den Netzbetreiber nach internen Kriterien wählen, durch eine andere Gruppe von Programmbefehlen ersetzt wird, die die beschriebenen Operationen durchführen.

4. Vorrichtung zum Betrieb in einem Betriebszusammenhang, bei dem die Zellen jedes von m empfangenen Netzen (N1, ..., Nm) Synchroninformation auf einem spezifischen Kanal senden, der aus digitalen Signalen besteht, die in Flüssen von Rahmennummern (FN1, ..., FNm) angeordnet sind, welche periodisch ansteigen, **gekennzeichnet durch**:

- Einrichtungen zum Speichern der m Rahmennummern (FN1, ..., FNm) am Telefon (T) während der Phase des Abtastens der vorhandenen Funkverbindungen (P1, ..., Pm);
- Einrichtungen zum Kombinieren dieser m Rahmennummern (FN1,..., FNm) **durch** eine Serie von Operationen EXKLUSIV ODER zum Erhalten der Variablen (csg);
- Einrichtungen zum Teilen dieser Variablen **durch** m und zum Abnehmen des Rests (MODULO-Operation) zum Erhalten eines Indexes (sel');
- Einrichtung zum Erhöhen des Indexes (sel') um 1, um den Index (sel) mit einem Wert zu erhalten, der zwischen 1 und m liegt, und der vom Telefon (T) zum Wählen eines der vorliegenden Netze (N1, ..., Nm) verwendet werden kann.

5. Vorrichtung nach Anspruch 4, **dadurch gekennzeichnet, daß** die Einrichtungen zum Kombinieren der m Rahmennummern (FN1, ..., FNm) dazu ausgebildet sind, eine Operation EXKLUSIV ODER an den beiden ersten Rahmennummern (FN1, FN2) durchzuführen und das Resultat anschließend einer weiteren Operation EXKLUSIV ODER mit der dritten Rahmennummer (FN3) zu unterwerfen und so weiter, bis alle Rahmennunimern dieser Operation unterworfen worden sind.

**6.** Mobiltelefon, umfassend eine Vorrichtung zum Wählen eines Mobiltelefon-Netzbetreibers, wobei die Vorrichtung nach Anspruch 4 oder 5 aufgebaut ist.

## Revendications

**1.** Procédure de sélection aléatoire d'un opérateur de téléphonie mobile pour des téléphones cellulaires, fonctionnant dans un contexte dans lequel les cellules de chacun des m réseaux reçus (N1, ..., Nm) transmettent, sur un canal spécifique, des informations de synchronisation consistant en signaux numériques agencés en flux de numéros de trames (FN1, ..., FNm), qui sont périodiquement augmentés, **caractérisé par le fait que** les m numéros de trames (FN1, ..., FNm) sont stockés dans le téléphone (T) pendant la phase d'analyse des liaisons radio (P1, ..., Pm) présentes, associées à des opérateurs respectifs, et sont ensuite combinés par une série d'opérations OU EXCLUSIF, le résultat étant une variable (csg), qui est ensuite soumise à une opération MODULO m, consistant à diviser la variable par m et à prendre le reste plus 1 en tant que résultat, de façon à obtenir une valeur (indice sel) comprise entre 1 et m, qui peut être utilisée par le téléphone (T) pour sélectionner l'un des réseaux (N1, ..., Nm) présents.

**2.** Procédure de sélection aléatoire d'un opérateur de téléphonie mobile pour des téléphones cellulaires selon la revendication 1, **caractérisé par le fait que** ladite série d'opérations OU EXCLUSIF consiste en une opération OU EXCLUSIF exécutée sur les deux premiers numéros de trames (FN1, FN2), le résultat étant ensuite soumis à une autre opération OU EXCLUSIF, avec le troisième numéro de trame (FN3), et ainsi de suite jusqu'à ce que tous les numéros de trame aient été soumis à cette opération.

**3.** Procédure de sélection aléatoire d'un opérateur de téléphonie mobile pour des téléphones cellulaires selon l'une quelconque des revendications précédentes, les téléphones cellulaires contenant un ensemble d'instructions logicielles stockées, déterminé pour sélectionner l'opérateur en fonction de critères internes, **caractérisé par le fait que** l'ensemble d'instructions logicielles dans le téléphone cellulaire qui sélectionne l'opérateur selon des critères internes est remplacé par un autre ensemble d'instructions logicielles qui exécute les opérations décrites.

**4.** Dispositif destiné à fonctionner dans un contexte dans lequel les cellules de chacun des m réseaux reçus (N1, ..., Nm) transmettent, sur un canal spécifique, des informations de synchronisation consistant en signaux numériques agencés en flux de numéros de trames (FN1, ..., FNm), qui sont périodiquement augmentés, **caractérisé par le fait qu'**il comprend

- des moyens servant à stocker lesdits m numéros de trames (FN1, ..., FNm) dans le téléphone (T) pendant la phase d'analyse des liaisons radio (P1, ..., Pm) présentes;
- des moyens servant à combiner lesdits m numéros de trames (FN1, ..., FNm) par une série d'opérations OU EXCLUSIF, afin d'obtenir la variable (csg) ;
- des moyens servant à diviser ladite variable par m et à extraire le reste (opération MODULO), afin d'obtenir un indice (sel') ;
- des moyens servant à augmenter ledit indice (sel') de 1, afin d'obtenir l'indice (sel), ayant une valeur comprise entre 1 et m, qui peut être utilisé par le téléphone (T) pour sélectionner l'un des réseaux (N1, ..., Nm) présents.

**5.** Dispositif selon la revendication 4, **caractérisé par le fait que** lesdits moyens utilisés pour combiner lesdits m numéros de trames (FN1, ..., FNm) sont agencés de manière à exécuter une opération OU EXCLUSIF sur les deux premiers numéros de trames (FN1, FN2), puis à soumettre le résultat à une autre opération OU EXCLUSIF, avec le troisième numéro de trame (FN3), et ainsi de suite jusqu'à ce que tous les numéros de trame aient été soumis à cette opération.

**6.** Téléphone cellulaire comprenant un dispositif destiné à sélectionner un opérateur de téléphonie mobile, ledit dispositif étant réalisé selon la revendication 4 ou 5.

Fig. 1

Fig. 2